# EUROPÄISCHE PATENTSCHRIFT

(11) **EP 2 087 646 B1**
(45) Veröffentlichungstag und Bekanntmachung des Hinweises auf die Patenterteilung: **16.01.2013**
(21) Anmeldenummer: 07822157.9
(22) Anmeldetag: 02.11.2007
(51) Int. Cl.: H04L 12/26, H04J 3/14, H04L 12/403

(54) **VORRICHTUNG UND VERFAHREN ZUR MANIPULATION VON KOMMUNIKATIONS-BOTSCHAFTEN**
DEVICE AND METHOD FOR MANIPULATING COMMUNICATION MESSAGES
DISPOSITIF ET PROCÉDÉ POUR LA MANIPULATION DE MESSAGES DE COMMUNICATION

(30) Priorität: 03.11.2006 DE 102006052266; 11.10.2007 DE 102007048860
(43) Veröffentlichungstag der Anmeldung: 12.08.2009
(73) Patentinhaber: Robert Bosch GmbH, 70442 Stuttgart (DE)
(72) Erfinder: BAYERL, Alexander, 71549 Auenwald-Hohnweiler (DE); HAHN, Siegfried, 75428 Illingen (DE)
(86) Internationale Anmeldenummer: PCT/EP2007/061826
(87) Internationale Veröffentlichungsnummer: WO 2008/053039

(56) Entgegenhaltungen:
- DE-A1-102006 013 329
- GB-A- 2 417 865
- US-B1- 6 931 022
- US-B1- 6 996 115

## Beschreibung

### Stand der Technik

Die vorliegende Erfindung betrifft eine Vorrichtung und ein Verfahren zur Manipulation von Kommunikations-Botschaften in einem Kommunikationssystem. Das Kommunikationssystem umfasst einen Datenbus und mehrere daran angeschlossene Knoten. Außerdem weist das Kommunikationssystem Mittel zur Übertragung von Botschaften in Botschaftsrahmen zu fest vorgegebenen Kommunikationszyklen auf. Die zu manipulierenden Botschaften sind für mindestens einen Knoten des Kommunikationssystems bestimmt.

Die Erfindung betrifft außerdem ein Kommunikationssystem, das einen Datenbus und mehrere daran angeschlossene Netzwerkknoten umfasst. Außerdem weist das Kommunikationssystem Mittel zum Übertragen von Kommunikations-Botschaften zwischen den Knoten über den Datenbus in Botschaftsrahmen zu fest vorgegebenen Kommunikationszyklen auf.

Die Vernetzung von Steuergeräten, Sensorik und Aktuatorik mit Hilfe eines Kommunikationssystems und einer Kommunikationsverbindung, beispielsweise in Form eines Datenbusses, hat in den letzten Jahren insbesondere im Kraftfahrzeugbereich, aber auch im Maschinenbau und dort vor allem im Werkzeugmaschinenbereich sowie in der Automatisierung stark zugenommen. Durch die Anbindung mehrerer Teilnehmer oder Knoten an einen Datenbus in einem Kommunikationssystem können durch Verteilung von Funktionen auf mehrere Knoten Synergieeffekte erzielt werden. Man spricht in diesem Zusammenhang auch von verteilten Systemen.

Die Kommunikation zwischen verschiedenen Teilnehmern eines solchen Kommunikationssystems findet über einen Datenbus statt. Der Kommunikationsverkehr auf dem Bussystem, Zugriffs- und Empfangsmechanismen, sowie Fehlerbehandlung werden über ein Datenübertragungs- oder Kommunikationsprotokoll geregelt. Ein aus dem Stand der Technik bekanntes Protokoll, welches eine Übertragung von Botschaften in Botschaftsrahmen zu fest vorgegebenen Kommunikationszyklen vorsieht, ist beispielsweise das FlexRay-Protokoll. Bei FlexRay handelt es sich um ein schnelles, deterministisches und fehlertolerantes Bussystem, insbesondere für den Einsatz in Kraftfahrzeugen. Das FlexRay-Protokoll arbeitet nach dem Prinzip des Time Division Multiple Access (TDMA), wobei den Teilnehmern bzw. den zu übertragenden Botschaften feste Zeitschlitze zugewiesen werden, in denen sie einen exklusiven Zugriff auf den Datenbus haben. Die Zeitschlitze wiederholen sich dabei in einem fest vorgegebenen Kommunikationszyklus, so dass der Zeitpunkt, zu dem eine Botschaft über den Datenbus übertragen wird, exakt vorausgesagt werden kann und der Buszugriff somit deterministisch erfolgt.

Um die Bandbreite für die Übertragung von Botschaften auf dem Datenbus optimal zu nutzen, unterteilt FlexRay den Kommunikationszyklus in einen statischen und einen dynamischen Teil. Die festen Zeitschlitze befinden sich dabei im statischen Teil am Anfang eines Kommunikationszyklus. Im dynamischen Teil wird die Größe der Zeitschlitze dynamisch vorgegeben. Darin wird der exklusive Buszugriff jeweils nur für eine kurze Zeit, für die Dauer mindestens eines sogenannten Minislots, ermöglicht. Nur wenn innerhalb eines Minislots ein Buszugriff erfolgt, wird der Zeitschlitz um die benötigte Zeit verlängert. Damit wird Bandbreite also nur verbraucht, wenn sie für die Übertragung von Informationen auch tatsächlich benötigt wird. Durch den dynamischen Teil eines Kommunikationszyklus wird im FlexRay trotz des deterministischen Charakters auch eine ereignisgesteuerte Botschaftsübertragung möglich.

In FlexRay sind zwei separate Kanäle zur Datenübertragung vorgesehen. Dabei kommuniziert FlexRay über eine oder zwei physikalisch getrennte Leitungen je Kanal mit einer Datenrate von jeweils maximal 10 Mbit/sec. Selbstverständlich kann FlexRay auch mit niedrigeren Datenraten betrieben werden. Die Leitungen der beiden Kanäle entsprechen dabei der physikalischen Schicht, insbesondere des sogenannten OSI (Open System Architecture)- Schichtenmodells. Es ist möglich, die beiden Kanäle zur redundanten und damit fehlertoleranten Übertragung von Botschaften zu nutzen, wobei dann zeitgleich die gleichen Daten über beide Kanäle übertragen werden. Alternativ können über die beiden Kanäle auch unterschiedliche Botschaften übertragen werden, wodurch sich dann die Datenrate in dem FlexRay-Kommunikationssystem verdoppeln könnte. Es ist auch denkbar, dass sich das über die Verbindungsleitungen übertragene Signal aus der Differenz von über die beiden Leitungen übertragenen Signalen ergibt. Schließlich kann für die Datenübertragung auch lediglich ein Kanal genutzt werden, wobei dann der andere Kanal ungenutzt und frei ist. Derzeit sind typische FlexRay-Anwendungen entweder einkanalig oder zweikanalig redundant ausgebildet. Die physikalische Schicht ist derart ausgestaltet, dass sie eine elektrische, aber auch optische Übertragung des oder der Signale über die Leitung (en) oder eine Übertragung auf anderem Wege ermöglicht.

Um in dem Kommunikationssystem synchrone Funktionen zu realisieren und die Bandbreite durch möglichst kleine Abstände (Freizeiten) zwischen zwei Botschaften zu optimieren, benötigen die Knoten in dem Kommunikationsnetzwerk eine gemeinsame Zeitbasis, die sogenannte globale Zeit. Für die Synchronisation von lokalen Uhren der Knoten werden Synchronisationsnachrichten im statischen Teil des Zyklus übertragen, wobei mit Hilfe eines speziellen Algorithmus entsprechend der FlexRay-Spezifikation die lokalen Uhrzeiten der Teilnehmer so korrigiert werden, dass alle lokalen Uhren zu einer globalen Uhr synchron laufen.

Ein FlexRay-Teilnehmer oder FlexRay-Knoten enthält einen Prozessor, einen Kommunikationscontroller sowie, falls eine Busüberwachung realisiert ist, einen sogenannten Bus Guardian. Dabei liefert und verarbeitet der Prozessor die Daten, die über den Kommunikationscontroller empfangen oder übertragen werden. Außerdem umfasst einen FlexRay-Teilnehmer einen Bustreiber für den Zugang auf die physikalische Schicht. Für die Kommunikation in einem FlexRay-Netzwerk können Botschaften bzw. Nachrichten mit zum Beispiel bis zu 254 Datenbytes konfiguriert werden.

Derzeit ist es nicht möglich, in einem deterministischen Kommunikationssystem eine gezielte Manipulation des Kommunikationssystems aus der Sicht von definierten Knoten des Kommunikationssystems vorzunehmen. Eine solche Manipulation kann eine Manipulation von in den Botschaftsrahmen übertragenen Botschaften bzw. von Nutzdaten der Botschaften und/oder eine Manipulation des physikalischen Datenbusses (z. B. Kurzschluss, Unterbrechung, Wackelkontakt, etc.) umfassen. Eine Manipulation des Betriebszustands des Kommunikationssystems kann beispielsweise im Zusammenhang mit dem Entwurf, der Auslegung und einem Probebetrieb des Kommunikationssystems sinnvoll sein. Dabei kann durch die Manipulation für bestimmte Knoten eines Kommunikationssystems ermittelt bzw. überprüft werden, wie der Knoten bzw. das Kommunikationssystem auf die Manipulation reagiert und/oder ob der Knoten bzw. das Kommunikationssystem in der erwarteten Weise reagiert. Die Knoten, aus deren Sicht die Manipulation des Betriebszustands des Kommunikationssystems erfolgt wird auch als Device under Test (DUT) bezeichnet.

Derzeit findet bspw. eine Manipulation der in einem deterministischen Kommunikationssystem übertragenen Botschaften lediglich auf Bit-Ebene statt. Diese Manipulationen sind als Stress-Tests für das Kommunikationssystem ausgelegt. Dabei werden jedoch nicht die eigentlichen Nutzdaten, sondern lediglich bestimmte Bits im sogenannten Header oder im sogenannten Trailer eines Botschaftsrahmens verändert. Eine weitergehende Manipulation von übertragenen Botschaften bzw. von in den Botschaften enthaltenen Nutzdaten wird derzeit nicht praktiziert und kann derzeit auch nicht realisiert werden.

Eine Manipulation des Betriebszustands eines Kommunikationssystems wäre im Stand der Technik allenfalls mit Änderungen an der Hardware und/oder Software der Knoten möglich. Durch eine solche Manipulation an den Knoten und/oder dem Datenbus zu Testzwecken würde jedoch das getestete Kommunikationssystem nicht mehr dem in der Praxis letzten Endes eingesetzten Kommunikationssystem (ohne Änderungen an den Knoten und dem Datenbus) entsprechen und das Ergebnis des Tests wäre nicht aussagekräftig für den eigentlichen Praxiseinsatz des Kommunikationssystems.

Die Druckschrift GB2417865A offenbart eine Vorrichtung gemäss dem Präambel des Anspruchs 1, ein Kommunikationssystem gemäss dem Präambel des Anspruchs 9 und ein Verfahren gemäss dem Präambel des Anspruchs 12.

### Offenbarung der Erfindung

Ausgehend von dem beschriebenen Stand der Technik liegt der vorliegenden Erfindung die Aufgabe zugrunde, auf eine möglichst einfache Weise eine beliebige Manipulation des Betriebszustands eines deterministischen Kommunikationssystems, insbesondere gezielt einen Kurzschluss, eine Unterbrechung und/oder einen Wackelkontakt zu ermöglichen, um aus Sicht bestimmter Knoten des Kommunikationssystems definierte Betriebszustände zu simulieren, ohne dass dafür eine Änderung an der Hardware und/oder Software an irgendeinem der Knoten und/oder dem Datenbus des Kommunikationssystems erforderlich wäre.

Zur Lösung dieser Aufgabe wird ausgehend von dem bekannten Stand der Technik eine Vorrichtung zur Manipulation eines Betriebszustandes eines Kommunikationssystems mit den Merkmalen des Anspruchs 1 vorgeschlagen. Insbesondere ist eine Manipulationsvorrichtung als Teil eines Kommunikationssystems vorgeschlagen, das einen physikalischen Datenbus und mehrere daran angeschlossene Knoten aufweist Die Manipulation des Betriebszustands erfolgt aus Sicht mindestens eines der Knoten und umfasst mindestens die Manipulation des physikalischen Datenbusses. In dem Kommunikationssystem werden Botschaften in Botschaftsrahmen zu fest vorgegebenen Kommunikationszyklen übertragen. Die Manipulationsvorrichtung ist in dem Datenbus zwischen dem mindestens einen Knoten, aus dessen Sicht der Betriebszustand des Kommunikationssystems manipuliert wird, und den übrigen Knoten des Kommunikationssystems angeordnet Die Vorrichtung weist Mittel zum Kurzschließen des Datenbusses und/oder zum Unterbrechen des Datenbusses auf.

Gemäß der vorliegenden Erfindung kann also auf einfache und kostengünstige Weise und vor allem ohne, dass das Kommunikationssystem gegenüber dem späteren Serieneinsatz hardware- oder softwaremäßig verändert werden müsste, der Betriebszustand des Kommunikationssystem gezielt verändert werden. Die erfindungsgemäße Vorrichtung wird zu Testzwecken einfach an der gewünschten Stelle in den Datenbus eingebracht und später für den Serienbetrieb aus dem Datenbus wieder entfernt. Ansonsten findet keine Änderung an dem Kommunikationssystem statt. Das ist die Voraussetzung dafür, dass die im Testbetrieb des Kommunikationssystems gewonnenen Erkenntnisse auch wirklich auf das tatsächlich realisierte Kommunikationssystem übertragbar und für den praktischen Einsatz aussagekräftig sind. Zur Manipulation des Betriebszustands des Kommunikationssystems werden die Mittel zum Kurzschließen und/oder Unterbrechen des Datenbusses von einer Steuereinrichtung (z. B. Mikrocontroller) oder durch ein externes Signal in geeigneter Weise angesteuert. Je nach Ansteuerung trennen die Mittel dann den Datenbus auf, schließen ihn über definierte Widerstände kurz oder simulieren einen Wackelkontakt. Das ist synchron oder asynchron zur Botschaftsübertragung über den Datenbus möglich. Aus Sicht des mindestens einen Knotens (sog. DUT) ist dann je nach Art der durchgeführten Manipulation ein Kurzschluss, eine Unterbrechung, ein Wackelkontakt oder ähnliches in dem Datenbus vorhanden. Während der Manipulation kann gezielt geprüft werden, ob der mindestens eine Knoten (DUT) in erwarteter Weise auf den geänderten Betriebszustand reagiert bzw. wie der mindestens eine Knoten (DUT) reagiert. Dadurch kann der Entwurf, die Auslegung und der Probebetrieb des Kommunikationssystems besonders einfach und sicher, insbesondere sehr realitätsnah und umfassend durchgeführt werden. Ein in unterschiedlichen Betriebszuständen besonders sicher und zuverlässig arbeitendes Kommunikationssystem kann auf diese Weise realisiert werden.

Es wird vorgeschlagen, dass die Mittel zum Kurzschließen und/oder zum Unterbrechen des physikalischen Datenbusses ein Schaltelement umfassen, das vorzugsweise als ein einfacher oder mehrfacher Schalter ausgebildet ist. Ein mehrfacher Schalter wird auch als Multiplexer/ Demultiplexer bezeichnet. Er verbindet mehrere Eingänge und/oder mehrere Ausgänge mit einem oder mehreren Ausgängen bzw. Eingängen. Das Schaltelement kann in Halbleitertechnik realisiert sein und bspw. als ein CMOS-Bauteil ausgebildet sein.

Gemäß einer vorteilhaften Weiterbildung der Erfindung werden in bestimmten Botschaftsrahmen, in denen Botschaften für mindestens einen definierten Knoten des Kommunikationssystems, der manipulierte Botschaften erhalten soll, übertragen werden, nicht die ursprünglichen Original-Botschaften übertragen, sondern manipulierte Botschaften. Die Manipulation der Botschaften erfolgt durch die in dem Datenbus angeordnete Manipulationsvorrichtung, welche die übertragenen Original-Botschaften vor Erreichen des Knotens, für den sie bestimmt sind, abfängt, manipuliert und die manipulierten Botschaften dann an den Knoten, für den die Original-Botschaften ursprünglich bestimmt waren, weiterleitet. Auf diese Weise ist neben der Manipulation des physikalischen Datenbusses auch eine Manipulation von Botschaften bzw. der darin enthaltenen Nutzdaten auf einfache Weise möglich, ohne dass es einer Änderung an der Hardware und/oder Software an irgendeinem der Knoten des Kommunikationssystems bedarf.

Vorzugsweise werden während einer Freizeit (sogenannte Channel Idle Time; CIT) zwischen den Botschaftsrahmen geeignete Schaltelemente der Vorrichtung derart umgeschaltet, dass in dem nachfolgenden Botschaftsrahmen nicht die Original-Botschaft zu den Testknoten übertragen wird, sondern die manipulierte Botschaft. Falls die manipulierten Daten absolute/ konstante Werte annehmen, gibt es zeitlich bezüglich der Zuordnung zu den Zeitschlitzen keine Einschränkung, d.h. die manipulierte Botschaft kann noch in dem gleichen Zeitschlitz übertragen werden, wie die Original-Botschaft übertragen worden wäre. Allerdings gilt, wenn sich zeitlich ändernde Signale manipuliert werden sollen, dass die manipulierten Werte aus den Originalwerten der entsprechenden vorangegangenen Botschaft, d.h. aus der entsprechenden Botschaft des vorangegangenen Zeitschlitzes, berechnet werden müssen. Der Grund dafür ist, dass die aktuellen Signalwerte von der Vorrichtung erst in dem Zeitschlitz eingelesen werden, in dem die manipulierten Signale von der Vorrichtung an den oder die Testknoten gesendet werden. Die manipulierten Botschaften können an dem oder den Testknoten somit erst mit einer gewissen Verzögerung gegenüber den eigentlichen Original-Botschaften empfangen werden. Die Verzögerung entspricht der Signal-Wiederholrate (Wiederholrate der Botschaften), insbesondere einem oder mehreren Kommunikationszyklen. Diese Verzögerung ist aber so lange ohne Einfluss auf ein ordnungsgemäßes Funktionieren des Kommunikationssystems, wie die Signal-Wiederholrate gegenüber der interessierenden Signaländerungsgeschwindigkeit groß genug ist. Für den Großteil der mechanischen Systeme bedeutet dies keine Einschränkung, weil diese eine solche Trägheit aufweisen, dass die Wiederholrate der Botschaften in aller Regel gegenüber der Signaländerungsgeschwindigkeit groß genug ist.

### Kurze Beschreibung der Zeichnungen

Die vorliegende Erfindung wird nachfolgend anhand der Figuren näher erläutert. Es zeigen:
- Figur 1: ein erfindungsgemäßes Kommunikationssystem mit der erfindungsgemäßen Vorrichtung gemäß einer ersten bevorzugten Ausführungsform;
- Figur 2: ein erfindungsgemäßes Kommunikationssystem mit der erfindungsgemäßen Vorrichtung gemäß einer weiteren bevorzugten Ausführungsform;
- Figur 3: einen Schaltplan des Kommunikationssystems aus Figur 2;
- Figur 4: ein erfindungsgemäßes Kommunikationssystem mit einer erfindungsgemäßen Vorrichtung gemäß einer weiteren bevorzugten Ausführungsform;
- Figur 5: einen Schaltplan des Kommunikationssystems aus Figur 4;
- Figur 6: ein erfindungsgemäßes Kommunikationssystem mit einer erfindungsgemäßen Vorrichtung gemäß einer weiteren bevorzugten Ausführungsform; und
- Figur 7: einen beispielhaften Verlauf der Kommunikationszyklen in den Kommunikationssystemen gemäß der Figuren 1, 2, 4 oder 6.

### Ausführungsform(en) der Erfindung

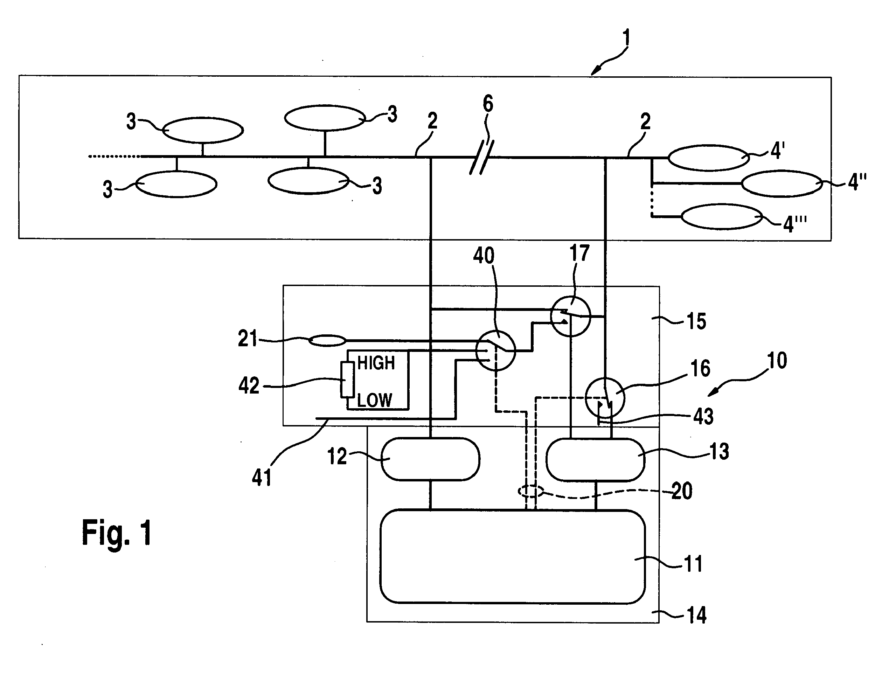

Die vorliegende Erfindung betrifft ein Kommunikationssystem, wie es beispielhaft in Figur 1 dargestellt und in seiner Gesamtheit mit dem Bezugszeichen 1 bezeichnet ist. Das Kommunikationssystem 1 umfasst einen physikalischen Datenbus 2, der vorzugsweise zwei separate physikalische Leitungen je Kanal aufweist. Zur Vereinfachung ist der Datenbus 2 in den Figuren lediglich als eine einzige Linie dargestellt. An den Datenbus 2 sind mehrere Knoten oder Teilnehmer 3, 4 angeschlossen. Während des Entwurfs, der Auslegung und/oder des Probebetriebs des Kommunikationssystems 1 kann es sinnvoll sein, aus Sicht einer oder mehrerer Komponenten 4; 4', 4", 4"' (sog. Device under Test; DUT) definierte Betriebszustände des Kommunikationssystems 1 zu simulieren. Dies umfasst bspw. ein gezieltes Manipulieren auf der physikalischen Kommunikationsebene, insbesondere ein Kurzschließen und/oder Unterbrechen des Datenbusses 2 oder die Simulation eines Wackelkontakts in dem Datenbus 2. Ebenso kann die Simulation bestimmter Betriebszustände die Manipulation der Botschaftsrahmen umfassen, die an die DUT-Komponenten 4; 4', 4", 4"' übertragen werden bzw. von diesen gesendet werden.

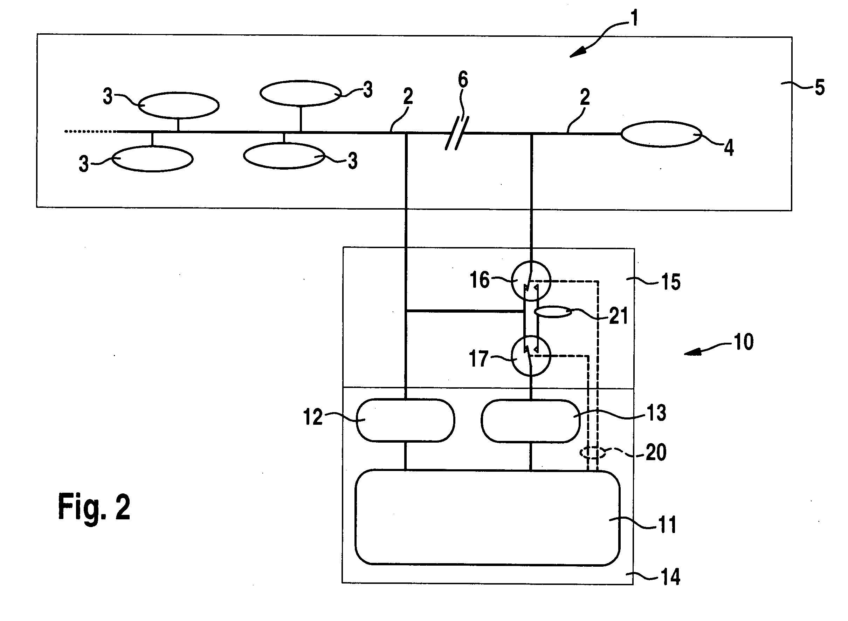

Zur Manipulation eines Betriebszustands des Kommunikationssystems 1 wird der Datenbus 2 zwischen den DUT-Komponenten 4; 4', 4", 4"' und den übrigen Komponenten 3 des Kommunikationssystems 1 an einer Stelle 6 aufgetrennt und dazwischen eine Manipulationsvorrichtung 10 eingebracht. Die Vorrichtung 10 umfasst Mittel 11, 12, 13 zur Manipulation von Botschaften der DUT-Komponenten 4; 4', 4", 4"' bzw. des Botschaftsinhalts, insbesondere der Nutzdaten. Außerdem umfasst die Vorrichtung 10 ein Schaltelement 40 in Form eines Schalters oder eines Multiplexers/Demultiplexers. Mit Hilfe des Schalterelements 40 kann der Datenbus 2 aufgetrennt (Anschluss 41), über definierte Widerstände 42 kurzgeschlossen werden oder es wird ein Wackelkontakt des Datenbusses 2 simuliert. Dies kann synchron oder asynchron zur Datenübertragung über den Datenbus 2 erfolgen. Die Erfindung wird nachfolgend unter Bezugnahme auf die Figuren 2 bis 7 näher erläutert. Die nachfolgenden Ausführungen gelten in entsprechender Weise jedoch auch für das Ausführungsbeispiel aus Figur 1.

In Figur 2 ist ein erfindungsgemäßes Kommunikationssystem, das in dem vorliegenden Ausführungsbeispiel als ein FlexRay-Kommunikationssystem ausgebildet ist, in seiner Gesamtheit mit dem Bezugszeichen 1 bezeichnet. Im Weiteren wird die vorliegende Erfindung anhand eines FlexRay-Kommunikationssystems näher erläutert, wobei dies nur insofern als einschränkend zu betrachten ist, als dass Eigenschaften des Kommunikationssystems Voraussetzung für die vorliegende Erfindung sind. Falls diese Voraussetzungen auch in einem anderen Kommunikationssystem gegeben sind, ist die vorliegende Erfindung auch auf ein solches Kommunikationssystem anwendbar. Damit ist die vorliegende Erfindung allgemein bei Bussystemen im Kommunikationsbereich einsetzbar, insbesondere bei solchen Kommunikationssystemen, bei denen die zu übertragenden Informationen in Botschaftsrahmen deterministisch (zu vorgegebenen Zeitpunkten) über das Bussystem übertragen werden.

Das Kommunikationssystem 1 umfasst einen Datenbus 2 und mehrere daran angeschlossene Kommunikationsteilnehmer 3, 4, die auch als Knoten bezeichnet werden. Der Datenbus 2 umfasst zwei Kanäle ChA, ChB und für jeden der Kanäle zwei Leitungen BP (Bus-Plus), BM (Bus-Minus). Der Datenbus 2 und die Knoten 3, 4 sind in dem beschriebenen Ausführungsbeispiel alle in einem Kraftfahrzeug 5 angeordnet. Selbstverständlich können der Datenbus 2 und die Knoten 3, 4 auch in einer Anordnung aus dem Werkzeugbereich, bspw. in einer Werkzeugmaschine, oder aus der Automatisierungstechnik angeordnet sein. Bei den Teilnehmern 3, 4 handelt es sich um Steuergeräte zur Steuerung und/oder Regelung bestimmter Funktionen des Kraftfahrzeugs 5. Dabei kann es sich um Steuergeräte für Motor oder Getriebe, für ein Antiblockiersystem, eine Antischlupfregelung oder ein Fahrdynamiksystem, oder um ein Steuergerät zur Realisierung einer beliebigen Komfortfunktion (Sitzverstellung, Klimatisierung des Innenraums, etc.) in dem Fahrzeug handeln. Die Steuergeräte 3, 4 tauschen untereinander Informationen über den FlexRay-Datenbus 2 aus. Die Informationen werden in dem FlexRay-Kommunikationssystem 1 in Botschaftsrahmen zu vorgegebenen Kommunikationszyklen übertragen. Das FlexRay-Protokoll arbeitet nach dem Prinzip des Time Division Multiple Access (TDMA), wobei den Knoten 3, 4 bzw. den übertragenden Botschaften feste Zeitschlitze in den Botschaftsrahmen zugewiesen sind, in denen sie einen exklusiven Zugriff auf den Datenbus 2 haben. Die Zeitschlitze wiederholen sich dabei in einem festgelegten Zyklus, der üblicherweise dem Kommunikationszyklus entspricht. Es ist aber auch denkbar, dass der Wiederholzyklus der Zeitschlitze zwei, drei oder noch mehr Kommunikationszyklen entspricht. In den dazwischen liegenden Kommunikationszyklen kann in dem entsprechenden Botschaftsrahmen eine andere Botschaft bzw. die Botschaft eines anderen Knotens 3, 4 übertragen werden. Dies wird auch als ein Multiplexbetrieb des Kommunikationssystems 1 bezeichnet. Somit kann der Zeitpunkt, zu dem eine Botschaft über den Datenbus 2 übertragen wird, exakt vorausgesagt werden, der Buszugriff erfolgt also deterministisch.

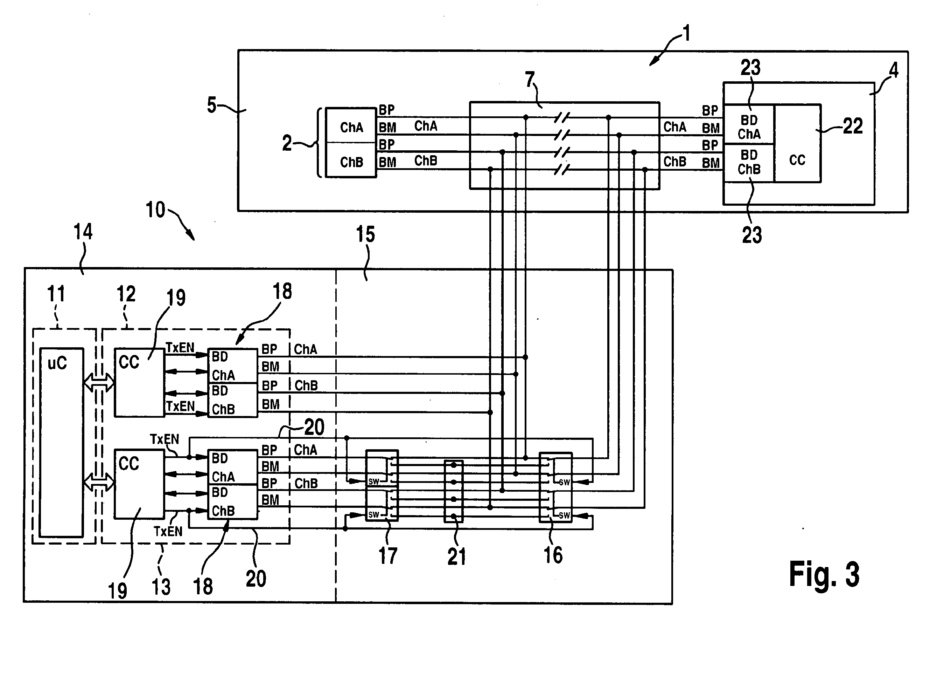

Nach dem Entwurf und dem Auslegen eines neuen Kommunikationssystems 1 muss dieses zunächst auf seine Funktionsfähigkeit in unterschiedlichen Betriebszuständen getestet werden. Dabei werden einige oder alle der Knoten 3, 4 nacheinander entweder einzeln oder in Gruppen mit gezielt manipulierten Botschaften beaufschlagt. Die Manipulation der Botschaften umfasst eine beliebige Änderung insbesondere der Nutzdaten der Botschaften, beispielsweise Änderungen von Statuswerten, Checksummenwerten, Offsetwerten, Offset-Rampen, Empfindlichkeitswerten, Skalierungswerten, etc. Durch die Manipulation der Botschaften bzw. der darin enthaltenen Nutzdaten können verschiedene Betriebszustände der Knoten 3, 4, des Datenbusses 2 und/oder des gesamten Kommunikationssystems 1 zu Testzwecken simuliert werden. In dem vorliegenden Ausführungsbeispiel werden die Knoten 3 ganz normal betrieben, und lediglich der Knoten 4 wird getestet. Der Knoten 4 wird deshalb auch als Device under Test (DUT) bezeichnet. Die Einzelheiten des DUT 4 sind in Figur 3 dargestellt. Demnach umfasst das DUT 4 einen Kommunikationscontroller (CC) 22, sowie für jeden Kanal ChA, ChB des Datenbusses 2 einen Bustreiber (BD) 23.

Damit der zu testende Knoten 4 auf einfache Weise mit manipulierten Botschaften beaufschlagt werden kann, insbesondere ohne dass es einer Änderung und/oder Erweiterung der Hardware und/oder der Software des Knoten 4 bzw. anderer Knoten 3 des Kommunikationssystems 1 bedarf, wird erfindungsgemäß der Einsatz einer gesonderten Vorrichtung vorgeschlagen, die in Figur 2 in ihrer Gesamtheit mit dem Bezugszeichen 10 bezeichnet ist. Die Vorrichtung 10 ist derart an einer Stelle 6, wo der Datenbus 2 unterbrochen wurde, in den Datenbus 2 eingebracht, dass sie die normal betriebenen Knoten 3 von dem zu testenden Knoten 4 trennt. Zum Auftrennen des Datenbusses 2 zwischen dem zu manipulierende FlexRay-Cluster 4 (umfasst einen oder mehrere zu testende Knoten) und dem restlichen FlexRay-Bus 2, 3 kann beispielsweise eine Zwischenbox oder Auskoppelbox 7 eingesetzt werden. Über diese Box 7 kann dann auch die Manipulations-Vorrichtung 10 mit dem unterbrochenen Datenbus 2 verbunden werden.

Als Basis für die Vorrichtung 10 kann ein Gerät verwendet werden, das eine Gateway-Funktion FlexRay/FlexRay bietet und programmierbar ist. Zu diesem Zweck verfügt die Vorrichtung 10 über einen programmierbaren Gateway 14. Der Gateway 14 weist einen Gateway-Controller 11 sowie zwei getrennte Knoten 12, 13, in dem vorliegenden Ausführungsbeispiel zwei getrennte FlexRay-Knoten, auf. Der Gateway-Controller 11 ist über die zwei FlexRay-Schnittstellen 12, 13 zu beiden Seiten der Trennstelle 6 an den Datenbus 2 angeschlossen. Die Knoten 12, 13 der Vorrichtung 10 können über einen Prozessor oder über mehrere miteinander kommunizierende Prozessoren per Software bedient werden. Möglich ist auch die Realisierung der Gateway-Funktionen mittels eines Personal Computers (PC) oder eines sog. Embedded Controllers, der über geeignete Schnittstellen zu dem Kommunikationssystem 1 verfügt, so dass mindestens zwei unabhängige Knoten des Kommunikationssystems 1 zur Verfügung stehen.

Des Weiteren verfügt die erfindungsgemäße Manipulations-Vorrichtung 10 über eine Zusatzhardware 15, die in dem vorliegenden Ausführungsbeispiel zwei schnelle analog Multiplexer pro FlexRay-Leitung BP, BM umfasst. Die Verschaltung der analog Multiplexer 16, 17 kann im Einzelnen Figur 3 entnommen werden. Dort sind sowohl beide Kanäle ChA, ChB als auch beide Leitungen BP, BM pro Kanal des Kommunikationssystems 1 dargestellt. Die Multiplexer 16, 17 müssen schnell genug sein, damit sie in der Freizeit (sogenannte Channel-Idle-Time) zwischen zwei Botschaftsrahmen vor bzw. nach dem entsprechenden Botschaftsrahmen umschalten können, ohne den Datenbus 2 zu stören. Anhand der Figur 3 ist auch zu erkennen, dass die beiden FlexRay-Knoten 12, 13 des programmierbaren Gateways 14 der Vorrichtung 10 jeweils einen Kommunikationscontroller (CC) 19 und einen Bustreiber (BD) 18 für jeden Kanal ChA, ChB aufweisen. Wie des weiteren Figur 3 im Einzelnen entnommen werden kann, umfasst jeder der Schalter 16, 17 zwei analoge Multiplexer (2 x 2 : 1). Der Schalter 16 in dem Ausführungsbeispiel aus den Figuren 2 und 3 dient dazu zu verhindern, dass für den Fall dass keine Manipulation der Botschaften stattfindet, d.h. die Original-Botschaften werden direkt durch die Vorrichtung 10 hindurch geschleift, ein Terminierungs-Netzwerk 21 das restliche FlexRay-Netzwerk 1 nicht belastet. Das Terminierungs-Netzwerk 21 ist abhängig von der Netztopologie, in der die Manipulations-Vorrichtung 10 zwischen geschaltet wird. Deshalb empfiehlt es sich, das Zuschalten oder Abschalten der Terminierung 21 unabhängig vom Umschalten der Multiplexer 16, 17 beispielsweise per Software zu steuern. Außerdem muss das Terminierungs-Netzwerk 21 derart "vorgespannt" werden, dass der physikalische Datenbus 2 so wenig wie möglich gestört wird. Dazu bedarf es evtl. noch einer zusätzlichen Beschaltung des Haupt-FlexRay-Clusters 2, 3.

Die Multiplexer 16, 17 müssen genau dann aktiviert bzw. deaktiviert werden, wenn auch der jeweilige Bustreiber (BD) 18 für den entsprechenden Zeitschlitz zum Senden der manipulierten Botschaft aktiviert bzw. deaktiviert wird. Das entsprechende Steuersignal für die Multiplexer 16, 17 ist in der Hardware üblicherweise vorhanden, falls nicht muss es mittels (Hardware-) Logik erzeugt werden. Solange aber der FlexRay-Kommunikationscontroller (CC) 19 und der FlexRay-Bustreiber 18 in getrennten Bausteinen untergebracht sind, lässt sich dieses Steuersignal in aller Regel zwischen Controller 19 und Treiber 18 direkt abgreifen. In dem dargestellten Ausführungsbeispiel wird als Steuersignal für die Multiplexer 16, 17 das Signal TxEN abgegriffen, das von dem Kommunikationscontroller 19 des sendenden Knotens 13 der Vorrichtung 10 an den entsprechenden Bustreiber 18 für die beiden Kanäle ChA, ChB übermittelt wird. Das Steuersignal TxEN wird über eine Leitung 20 zu entsprechenden Schalteingängen SW der Schalter 16, 17 geführt. Auch das Schaltelement 40 kann über eine Leitung 20 mit dem Steuersignal TxEN angesteuert werden (vgl. Figur 1).

Falls in dem Ausführungsbeispiel aus Figur 1 die Aktivierung bzw. Deaktivierung der Manipulation des Betriebszustands des Kommunikationssystems 1 bzw. des Schaltelements 40 per Software-Steuerung des Kommunikationscontrollers 19 der Knoten 12, 13 der Manipulationsvorrichtung 10 nicht zufriedenstellend funktioniert, kann auch wie folgt vorgegangen werden. Entweder die Botschaften werden einfach unverändert kopiert; dadurch ändert sich am Aufbau nichts. Oder ein weiterer steuerbarer Schalter/Multiplexer 16 lässt die manipulierte Botschaft ins Leere 43 laufen und das zu testende FlexRay-Cluster 4', 4", 4"' wird mit der Originalbotschaft bedient. Dazu ist die Ansteuerlogik für das Schaltelement 17 zu ändern, oder aber der zusätzliche Schalter/ Multiplexer 16 schaltet die Verbindung zum original Datenbus 2.

Falls das Kommunikationssystem 1 bzw. das entsprechende Kommunikationsprotokoll eine Busüberwachung, einen sogenannten Bus Guardian BG, in den Knoten 12, 13 (und auch in den Knoten 3, 4) vorsehen, müsste das Steuersignal zum Umschalten der Schaltelemente 16, 17 derart generiert werden, dass das Senden der manipulierten Botschaften bzw. der Original-Botschaften (Botschaften werden durch die Vorrichtung 10 hindurch geschleift) nicht in Konflikt mit dem Bus Guardian tritt. Des weiteren müsste das Steuersignal derart generiert werden, dass die Manipulation in der physikalischen Kommunikationsebene mittels des Schaltelements 40, z. B. das Kurzschließen oder Unterbrechen des Datenbusses 2, nicht in Konflikt mit dem Bus Guardian tritt.

Das beschriebene Prinzip der selektiven Umschaltung (Aktivierung/Deaktivierung der Vorrichtung 10) zu Manipulationszwecken lässt sich durch den Einsatz mehrerer Multiplexer/Schalter 16, 17 bzw. sogenannter Crosspoint-Switches dahingehend erweitern, dass Manipulationen der Botschaften bzw. des Inhalts der Botschaften in beide Richtungen möglich sind. Dadurch kann eine besonders umfangreicher, flexibler und realitätsnaher Testbetrieb des Systems 1 durchgeführt werden.

In dem programmierbaren Gateway 14 kann als Software jedes Computerprogramm verwendet werden, das die Schnittstellen des Kommunikationssystems 1, in dem beschriebenen Ausführungsbeispiel die FlexRay-Schnittstellen 12, 13, unterstützt und entsprechend programmierbar ist. Das kann zum Einen selbst geschriebene proprietäre Software sein. Es kann aber auch am Markt frei erhältliche Standardsoftware sein, wie beispielsweise CANalyzer oder CANoe von Vector Informatik GmbH, Ingersheimer Straße 24, 70499 Stuttgart oder entsprechende Software von anderen Anbietern, wie beispielsweise DeComSys sein. Besonders bevorzugt wird Software benutzt, welche Fibex-Dateien als Input nutzen kann. Das Field Bus Exchange Format (FIBEX) bietet eine standardisierte Beschreibung eines Netzwerks. In einer Fibex-Datei sind insbesondere Informationen über die Netzwerk-Topologie sowie über das zeitliche Verhalten bei der Informationsübertragung in dem Netzwerk enthalten. Die Fibex-Datei umfasst insbesondere Informationen darüber, welcher Knoten in welchem Zeitschlitz mit welchen anderen Knoten kommuniziert, die Zyklusdauer, Setup-Informationen für die Kommunikationscontroller, physikalische Einheiten der übertragenen Daten, etc. Die Fibex-Datei umfasst auch Informationen darüber, welcher der Knoten wann Synchronisationsrahmen (sog. Sync-Frames) sendet. Die Fibex-Datei liegt in der Regel im XML (Extensible Markup Language)-Format vor und kann deshalb besonders leicht verarbeitet und editiert werden. XML ist eine Metasprache und ein Quasi-Standard zur Erstellung strukturierter Dokumente im World Wide Web oder in Intranets.

Zur Realisierung der vorliegenden Erfindung muss die Fibex-Datei nicht modifiziert werden. Bei dem in den Figuren 2 und 3 dargestellten Ausführungsbeispiel ist die Fibex-Datei jedoch so modifiziert, dass der eine FlexRay-Knoten 12 der Vorrichtung 10 nur liest (Monitoring-Funktion) und der andere FlexRay-Knoten 13 der Vorrichtung 10 den manipulierten Botschaftsrahmen bzw. die manipulierte Botschaft oder die darin enthaltenen manipulierten Daten in dem Zeitschlitz sendet, in dem der zu manipulierende Original-Botschaftsrahmen gesendet würde. Durch das Umschalten der Multiplexer 16, 17, die ohne weitere Logik gleichzeitig mit dem Freischalten der Bustreiber 18 umgeschaltet werden können, wird dann anstelle der Original-Botschaft die manipulierte Botschaft zu dem zu testenden Knoten 4 gesendet. Alternativ ist es ohne Manipulation der Fibex-Datei auch möglich, die beiden FlexRay-Knoten 12, 13 der Vorrichtung 10 aufgrund der Informationen aus der Fibex-Datei derart zu initialisieren, dass sie ihre spezielle Aufgabe erfüllen können. Das bedeutet, dass der Knoten 12 so initialisiert wird, dass er nur liest und die kompletten Botschaften der für die Manipulation wichtigen Botschaftsrahmen zwischenspeichert (Original-Botschaftsrahmen). Auf diese abgespeicherten Botschaften bzw. den darin enthaltenen Dateninhalt, vorzugsweise den Nutzdateninhalt, greifen dann die Software-Routinen zu, die diese Daten manipulieren und wieder zu Botschaften, den manipulierten Botschaften, zusammensetzen.

Mit diesen manipulierten FlexRay-Botschaften wird der Knoten 13 bedatet, damit dieser dann anstelle der Original-Botschaftsrahmen bzw. der Original-Botschaften die manipulierten Rahmen bzw. Botschaften zu dem zu testenden Knoten 4 schickt. Der FlexRay-Knoten 13 muss derart initialisiert werden, dass er nur dann als Sender aktiv wird, wenn die Zeitschlitze der Original-Botschaftsrahmen an der Reihe sind, die es zu manipulieren gilt. Der Knoten 13 ist also immer an der Reihe mit Senden, wenn auch die Original-Sendeknoten 3 der für die Manipulation relevanten Botschaftsrahmen mit dem Senden dieser Rahmen an der Reihe sind. Die Information wann welcher Knoten 3 mit dem Senden an der Reihe ist, kann der Fibex-Datei entnommen werden.

Dadurch, dass außer in diesen Zeitschlitzen, zu denen die manipulierten Botschaften übermittelt werden, alle beteiligten Netzwerkknoten 3, 4 miteinander verbunden sind, wird die dauernde Synchronisierung des Netzwerks bzw. der lokalen Uhren der einzelnen Komponenten 3, 4 auf die globale Zeit nicht gefährdet. Es ist sogar möglich, dass die Manipulations-Vorrichtung 10 durch die Initialisierung die Aufgabe des die Original-Botschaft sendenden Knotens 3 übernimmt bzw. übernehmen kann, so dass der Kommunikationscontroller CC 19 des sendenden Knotens 13 den Botschaftsrahmen dann in dem entsprechenden Zeitschlitz als Synchronisationsrahmen sendet. Das wird allein durch die Software entschieden, der alle diesbezüglichen Informationen durch die Fibex-Datei vorliegen.

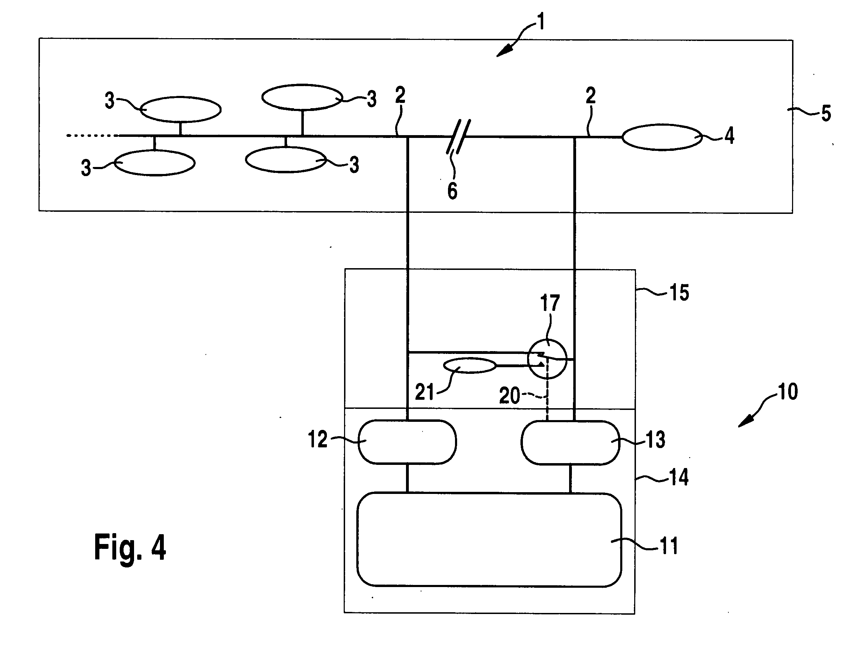

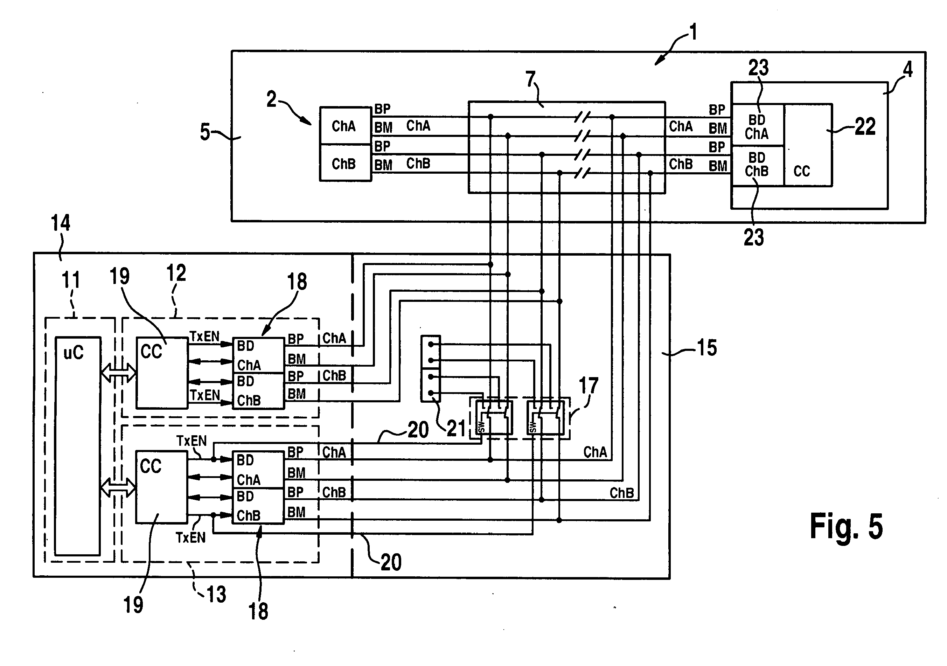

Ein in den Figuren 4 und 5 dargestelltes weiteres Ausführungsbeispiel unterscheidet sich von dem ersten Ausführungsbeispiel aus den Figuren 2 und 3 insbesondere dadurch, dass nur noch ein Multiplexer-Kanal pro FlexRay-Leitung benötigt wird. Deshalb ist in der erfindungsgemäßen Manipulations-Vorrichtung 10 in Figur 4 auch nur noch ein Schalter 17 eingezeichnet; auf den Schalter 16 wurde verzichtet. Dementsprechend zeigt die detaillierte Schaltung in Figur 5 auch nur noch den einen Schalter 17, der zwei analoge Multiplexer, einen für jeden Kanal ChA, ChB, umfasst. Die einzelnen Multiplexer des Schalters 17 sind gemäß der Schaltung aus Figur 5 verschaltet. Das Signal zur Ansteuerung der Multiplexer ist identisch mit dem Signal TxEN (Transmit Enable), das von dem Kommunikationscontroller 19 an die Bustreiber 18 des sendenden Knotens 13 gesendet wird. Das Ansteuersignal TxEN für die Multiplexer des Schalters 17 liegt über die Leitungen 20 an dem Schaltsignaleingang SW der Multiplexer an. Die Multiplexer des Schalters 17 werden also ohne weitere Logik gleichzeitig mit dem Freischalten der Bustreiber 18 umgeschaltet, so dass dann anstelle der Original-Botschaften die manipulierten Botschaften zu dem zu testenden Gerät 4 gesendet werden.

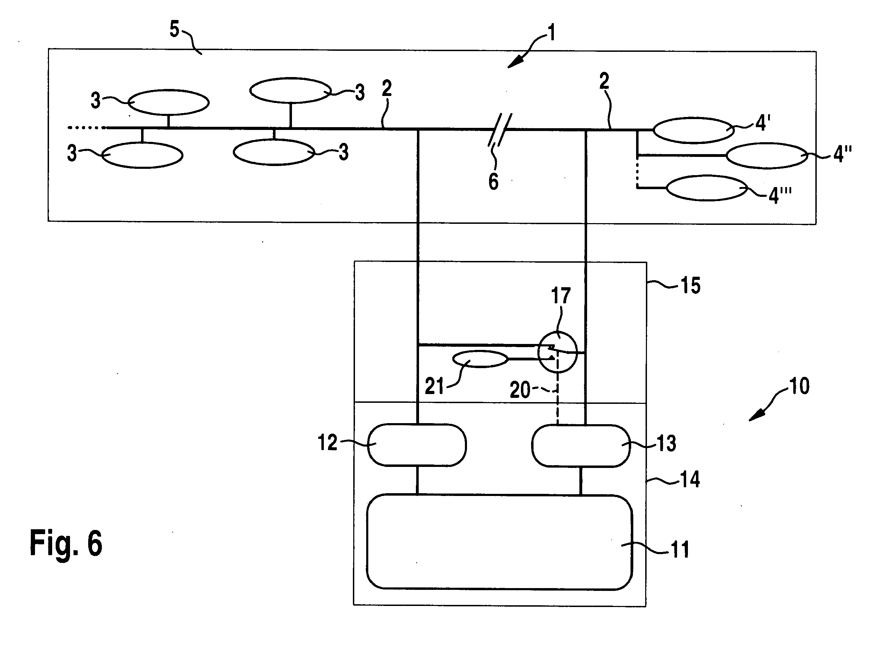

In Figur 6 ist ein weiteres Ausführungsbeispiel der vorliegenden Erfindung dargestellt. Der wesentliche Unterschied zu den Ausführungsbeispielen aus den Figuren 2 bis 5 besteht darin, dass die erfindungsgemäße Manipulations-Vorrichtung 10 nicht nur zum Beaufschlagen eines einzigen zu testenden Knotens 4 mit manipulierten Botschaften, sondern auch zum Beaufschlagen mehrerer zu testender Knoten 4', 4", 4"' eines sogenannten Sub-Clusters eingesetzt werden kann. Die Informationen, für welche Knoten 4', 4", 4"' bestimmte Botschaften von der Vorrichtung 10 abgefangen und manipuliert werden sollen, müssen in der Manipulations-Vorrichtung 10 vorhanden sein. Manipulierte Botschaften für den Knoten 4' werden in dem dafür vorgesehenen Zeitschlitz des entsprechenden Kommunikationszyklus von dem Knoten 13 der Vorrichtung 10 gesendet. Für die anderen zu testenden Knoten 4" und 4"' bestimmte manipulierte Botschaften werden zu dem entsprechenden, den Original-Botschaften bzw. den zu testenden Knoten 4", 4'" zugeordneten Zeitschlitzen und Kommunikationszyklen an diese übertragen. Aus der Vielzahl der auf dem Datenbus 2 übertragenen Botschaftsrahmen bzw. Botschaften kann die erfindungsgemäße Manipulations-Vorrichtung 10 also gezielt diejenigen Botschaften herausgreifen, die für einen der Knoten 4', 4", 4'" des Sub-Clusters bestimmt sind, die abgefangenen Botschaften bzw. deren Inhalt gemäß Vorgabe manipulieren und die manipulierte Botschaften an den entsprechenden zu testenden Knoten 4', 4", 4"' des Sub-Clusters senden.

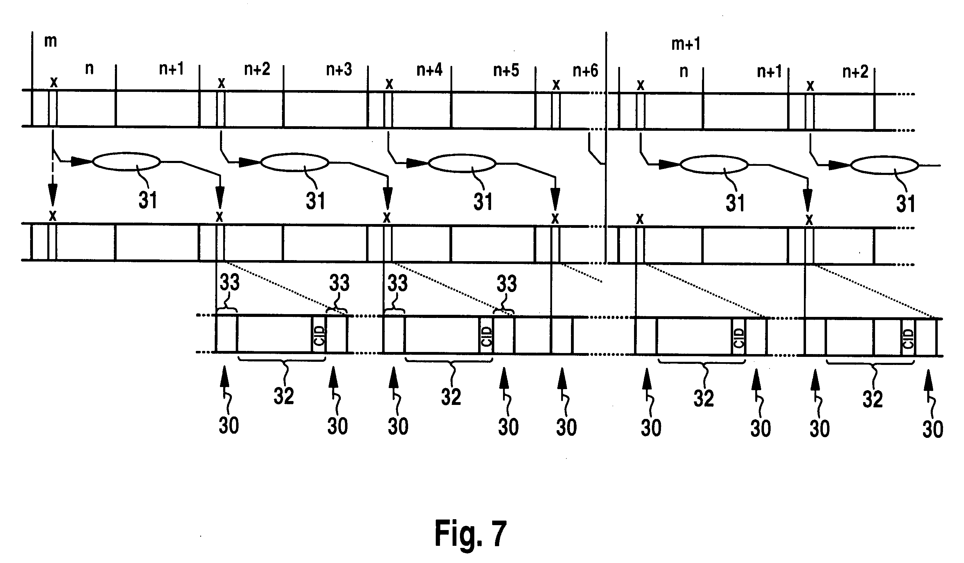

Der Ablauf des erfindungsgemäßen Verfahrens wird im Folgenden anhand der Figur 7 näher erläutert. Figur 7 zeigt mehrere aufeinander folgende Wiederholzyklen m, m+1 in dem FlexRay-Kommunikationssystem 1. Jeder Wiederholzyklus m, m+1 ist in mehrere Kommunikationszyklen n, n+1, ... unterteilt. In jedem Zyklus n, n+1, ... wird ein Zykluszähler (Cycle Counter) um 1 erhöht. Der Cycle Counter läuft vorzugsweise von 0 bis 63, um dann wieder bei 0 zu beginnen. Alternativ kann der Cycle Counter auch von 63 auf 0 heruntergezählt werden, um dann wieder bei 63 zu beginnen. Ein Wiederholzyklus entspricht jeweils einem Durchlauf des Cycle Counters von 0 bis 63 oder von 63 bis 0. Selbstverständlich kann statt des Anfangswerts bzw. Endwerts 63 auch ein beliebig anderer Wert > 0 gewählt werden. Jeder Zyklus n, n+1, ... ist wiederum in mehrere Zeitschlitze unterteilt, von denen in Figur 7 beispielhaft ein Zeitschlitz x eingezeichnet ist. Jeder Zeitschlitz eines Zyklus ist einem bestimmten Knoten 3, 4, des Kommunikationssystems 1 und/oder einer bestimmten Botschaft zugeordnet. In dem in Figur 7 dargestellten Beispiel wird eine Art Multiplexing betrieben, indem der Zeitschlitz x lediglich in jedem zweiten Zyklus n, n+2, n+4, ... enthalten ist. In den dazwischen liegenden Zyklen n+1, n+3, n+5, ... kann der entsprechende Zeitschlitz zur Übertragung einer anderen Botschaft bzw. zur Übertragung von Botschaften von einem anderen Knoten 3, 4 genutzt werden.

Das obere Ablaufdiagramm in Figur 7 zeigt FlexRay-Botschaften des ursprünglichen, unmanipulierten Netzwerks 1. In dem darunter liegenden Ablaufdiagramm sind die FlexRay-Botschaften dargestellt, wie sie bei dem oder den zu testenden Knoten 4 ankommen. Unterhalb des zweiten Ablaufdiagramms ist eine Vergrößerung der Zeitschlitze x dargestellt. Eine grobe Unterteilung der Zeitschlitze x umfasst zunächst eine Channel-Idle-Zeit 33, gefolgt von dem eigentlichen FlexRay-Botschaftsrahmen (Frame) 32 und einem Bit-Channel-Idle-Delimiter (CID), gefolgt von einer weiteren Channel-Idle-Zeit 33. Der FlexRay-Botschaftsrahmen 32 ist unterteilt Header, Payload (Nutzdaten) und Trailer. Die zu manipulierenden Informationen einer Botschaft umfassen in dem FlexRay-Botschaftsrahmen 32 abgelegte Informationen, vorzugsweise Nutzdaten. Durch Pfeile 30 sind in Figur 7 die Zeitpunkte während der Channel-Idle-Zeiten 33 angedeutet, zu denen der Kommunikationscontroller 19 der Vorrichtung 10 die analogen Multiplexer der Schalter 16, 17 zeitgleich mit der Aktivierung/Deaktivierung des Bustreibers 18 schaltet, d.h. die Manipulation der Botschaften aktiviert bzw. deaktiviert.

Zu Beginn der Kommunikation sind alle Knoten 3, 4 des Kommunikationssystems 1 miteinander verbunden (die Trennstelle 6 ist nicht vorhanden). Dadurch wird die Initialisierung des Kommunikationssystems 1 und die Synchronisierung aller Knoten 3, 4 ganz normal wie bei einem herkömmlichen Kommunikationssystem 1 durchlaufen. Wenn die zu manipulierende Botschaft das erste Mal gesendet wird (Zyklus n im Wiederholungszyklus m), wird diese unverändert an das zu testende Gerät 4 weitergeleitet. Dort liegt also beim ersten Zyklus n die Original-Botschaft an. Das muss die Software der Manipulations-Vorrichtung 10 bzw. die Software des programmierbaren Gateways 14 sicherstellen. Gleichzeitig wird die im Original weitergeleitete Botschaft in der Vorrichtung 10 zwischengespeichert, manipuliert (Funktionsblock 31) und für den nächsten Zyklus n+2, zu dem dieser Zeitschlitz x das nächste Mal wieder dran ist, in den Kommunikationscontroller 19 des sendenden Knotens 13 der Vorrichtung 10 geschrieben. Das bedeutet also, dass zum Zyklus n+2 die in diesem Zyklus übertragene Original-Botschaft von der Vorrichtung 10 abgefangen wird. Statt der abgefangenen Original-Botschaft aus dem Zyklus n+2 wird die manipulierte Botschaft aus dem vorangegangenen Zyklus n, zu dem der Zeitschlitz x das letzte Mal dran war, an den oder die zu testenden Knoten 4; 4', 4", 4"' gesendet.

Wenn der Zeitschlitz x der zu manipulierenden Botschaft gemäß Zeitplan (Schedule) mit der Botschaftsübertragung dran ist, steuert der Kommunikationscontroller 19 des sendenden Knotens 13 der Manipulations-Vorrichtung 10 die Bustreiber 18 für eine Sendebotschaft an. Gleichzeitig mit diesem Signal werden die Multiplexer der Schalter 17 und - falls vorhanden -16 umgeschaltet und dadurch die manipulierte Botschaft in diesem Zeitschlitz x auf den FlexRay-Datenbus 2 zum zu testenden Knoten 4 bzw. den Sub-Cluster 4', 4", 4'" gelegt.

Sobald die Manipulation 31 deaktiviert wird, muss die Software des programmierbaren Gateways 14 das Senden des Botschaftsrahmens für den zu manipulierenden Zeitschlitz x unterbinden. Dadurch werden auch die Multiplexer 16, 17 umgeschaltet, und der Original-Datenrahmen bzw. die Original-Botschaft wird an den Testknoten 4 bzw. das Sub-Cluster 4', 4", 4"' weitergeleitet.

Selbstverständlich muss für die Manipulations-Software des programmierbaren Gateways 14 der erfindungsgemäßen Manipulations-Vorrichtung 10 der Aufbau der Botschaften bekannt sein, damit die zu manipulierenden Werte der Original-Botschaft auch in gewünschter Weise manipuliert und dann die manipulierte Botschaft generiert werden kann. Außerdem müssen durch die Vorrichtung 10, sofern vorhanden, zum Beispiel die Botschaftsnummern inkrementiert und die nötigen Checksummen neu berechnet. Auch diese Informationen müssen ggf. in der manipulierten Botschaft abgelegt werden. Wichtig ist, dass die Manipulations-Vorrichtung 10 für die zu testenden Knoten 4; 4', 4", 4'" unsichtbar für diese bestimmte Botschaften abfängt, in vorgegebener Weise manipuliert und wieder zu einer manipulierten Botschaft zusammensetzt, die der in dem Kommunikationssystem 1 verwendeten Protokollspezifikation entspricht. Für das gesamte Kommunikationssystem 1 muss der Einsatz der erfindungsgemäßen Manipulations-Vorrichtung 10 praktisch unsichtbar sein, jedenfalls dürfen durch die Vorrichtung 10 nicht einfach für die ordnungsgemäße Kommunikation erforderliche Informationen in den Botschaften gelöscht und/oder fehlerhafte Botschaften generiert werden, die zu einem Fehler des Kommunikationssystems 1 führen könnten. Die zu testenden Knoten 4 erhalten die für sie bestimmten Botschaften ganz normal wie bisher auch, allerdings mit einem manipulierten Inhalt und - je nach Wiederholrate des Zeitschlitzes x - um einen oder mehrere Zyklen n, n+1, ... verzögert. Die Verzögerung ist jedoch in aller Regel für den zu testenden Knoten 4 ohne Bedeutung, solange die Wiederholrate des Zeitschlitzes x gegenüber der interessierenden Signal-Änderungsgeschwindigkeit des manipulierten Signals groß genug ist.

## Patentansprüche

1. Vorrichtung (10) zur Manipulation eines Betriebszustandes eines Kommunikationssystems (1) umfassend einen physikalischen Datenbus (2) und mehrere daran angeschlossene Knoten (3, 4; 4', 4", 4"') aus Sicht mindestens eines der Knoten (3, 4; 4', 4", 4"'), wobei das Kommunikationssystem (1) Mittel zur Übertragung von Botschaften in Botschaftsrahmen (32) zu fest vorgegebenen Kommunikationszyklen (n, n+1, n+2, ...) aufweist,
**dadurch gekennzeichnet, dass** die Manipulation des Betriebszustandes mindestens die Manipulation des physikalischen Datenbusses (2) umfasst, und dass die Vorrichtung (10) so ausgestattet ist, die Manipulation des Betriebszustandes auszuführen, wenn sie in einer Position in dem Datenbus (2) zwischen dem mindestens einen Knoten (4; 4', 4", 4"'), aus dessen Sicht der Betriebszustand des Kommunikationssystems (1) manipuliert wird, und den übrigen Knoten (3) des Kommunikationssystems (1) angeordnet ist, und dass die Vorrichtung (10) Mittel zum Kurzschließen des Datenbusses (2) und/oder zum Unterbrechen des Datenbusses (2) aufweist.

2. Vorrichtung (10) nach Anspruch 1, **dadurch gekennzeichnet, dass** die Mittel zum Kurzschließen und/oder Unterbrechen des Datenbusses (2) mindestens ein Schaltelement umfassen.

3. Vorrichtung (10) nach Anspruch 2, **dadurch gekennzeichnet, dass** das Schaltelement als ein Schalter oder ein Multiplexer/ Demultiplexer ausgebildet ist.

4. Vorrichtung (10) nach einem der Ansprüche 1 bis 3, **dadurch gekennzeichnet, dass** die Vorrichtung (10) Mittel (12) zum Abfangen der Botschaften vor Erreichen des mindestens einen Knotens (4; 4', 4", 4"'), Mittel (11) zur Manipulation der abgefangenen Botschaften und Mittel (13) zum Senden der manipulierten Botschaften an den mindestens einen Knoten (4; 4', 4", 4"') aufweist.

5. Vorrichtung (10) nach einem der Ansprüche 1 bis 4, **dadurch gekennzeichnet, dass** die Manipulationsvorrichtung (10) gezielt aktivierbar und deaktivierbar ist, wobei sie im deaktivierten Zustand den physikalischen Datenbus (2) nicht manipuliert und/oder die für den durch die Manipulationsvorrichtung (10) von dem Datenbus getrennten mindestens einen Knoten (4; 4', 4", 4"') bestimmten Botschaften ohne Manipulation passieren lässt

6. Vorrichtung (10) nach Anspruch 5, **dadurch gekennzeichnet, dass** zwischen den übertragenen Botschaftsrahmen (32) Freizeiten (33) vorgesehen sind, in denen keine Kommunikations-Botschaften übertragen werden, und dass die Manipulationsvorrichtung (10) Schaltmittel (16, 17) zur Aktivierung bzw. Deaktivierung der Mittel (11) zur Manipulation der Botschaften während der Freizeiten (33) aufweist.

7. Vorrichtung (10) nach einem der Ansprüche 1 bis 6, **dadurch gekennzeichnet, dass** die Vorrichtung (10) über Informationen betreffend den Aufbau und das zeitliche Verhalten des Kommunikationssystems (1), insbesondere betreffend die Botschaftsübertragung über den Datenbus (2), verfügt, und die Vorrichtung (10) die Aktivierung bzw. Deaktivierung der Mittel zur Manipulation des physikalischen Datenbusses (2) und/oder der Mittel (11) zur Manipulation der Botschaften in Abhängigkeit von den Informationen betreffend das Kommunikationssystem (1) veranlasst.

8. Vorrichtung (10) nach Anspruch 7, **dadurch gekennzeichnet, dass** die Informationen betreffend das Kommunikationssystem (1) in Form einer Fibex-Datei vorliegen.

9. Kommunikationssystem (1) umfassend einen physikalischen Datenbus (2) und mehrere daran angeschlossene Knoten (3, 4; 4', 4", 4"'), wobei das Kommunikationssystem (1) Mittel zum Übertragen von Kommunikations-Botschaften zwischen den Knoten (3, 4; 4', 4", 4"') über den Datenbus (2) in Botschaftsrahmen (32) zu fest vorgegebenen Kommunikationszyklen (n, n+1, n+2, ...) aufweist, **dadurch gekennzeichnet, dass** das Kommunikationssystem (1) eine in den Datenbus (2) zwischen mindestens einen der Knoten (4; 4', 4", 4'") und die übrigen Knoten (3) des Kommunikationssystems (1) eingebrachte Vorrichtung (10) zur Manipulation eines Betriebszustandes des Kommunikationssystems (1) aus Sicht des mindestens einen durch die Vorrichtung (10) von den übrigen Knoten (3) getrennten Knotens (4; 4', 4", 4"') umfasst, wobei die Vorrichtung (10) Mittel zum Kurzschließen des Datenbusses (2) und/oder zum Unterbrechen des Datenbusses (2) aufweist.

10. Kommunikationssystem (1) nach Anspruch 9, **dadurch gekennzeichnet, dass** das Kommunikationssystem (1) als ein FlexRay-Kommunikationssystem ausgebildet ist

11. Kommunikationssystem (1) nach Anspruch 9 oder 10, **dadurch gekennzeichnet, dass** die Vorrichtung (10) nach einem der Ansprüche 2 bis 8 ausgebildet ist.

12. Verfahren zur Manipulation eines Betriebszustandes eines Kommunikationssystems (1) umfassend einen physikalischen Datenbus (2) und mehrere daran angeschlossene Knoten (3, 4; 4', 4", 4'"), wobei das Verfahren die Manipulation des Betriebszustandes des Kommunikationssystems (1) aus Sicht mindestens eines der Knoten (4; 4', 4", 4"') umfasst, dass wobei in dem Kommunikationssystem (1) die Botschaften in Botschaftsrahmen (32) zu fest vorgegebenen Kommunikationszyklen (n, n+1, n+2, ...) übertragen werden,
**dadurch gekennzeichnet, dass** die Manipulation des Betriebszustandes mindestens die Manipulation des physikalischen Datenbusses (2) umfasst, dass die Manipulation des Betriebszustandes des Kommunikationssystems (1) zwischen den mindestens einen Knoten (4; 4', 4", 4"'), aus dessen Sicht der Betriebszustand des Kommunikationssystems (1) manipuliert wird, und den übrigen Knoten (3) des Kommunikationssystems (1) eine Vorrichtung (10) zur Manipulation des Betriebszustandes eingebracht wird.

13. Verfahren nach Anspruch 12, **dadurch gekennzeichnet, dass** im Rahmen der Manipulation des Betriebszustandes des Kommunikationssystems (1) auch für den mindestens einen Knoten (4; 4', 4", 4"'), aus dessen Sicht der Betriebszustand des Kommunikationssystems (1) manipuliert wird, bestimmte Botschaften manipuliert werden und die zu manipulierenden Botschaften vor Erreichen des mindestens einen Knotens (4; 4', 4", 4"') von der Vorrichtung (10) abgefangen und manipuliert werden und die manipulierten Botschaften an den mindestens einen Knoten (4; 4', 4", 4"') übermittelt werden.

## Claims

1. Apparatus (10) for manipulating an operating state of a communication system (1) comprising a physical data bus (2) and a plurality of nodes (3, 4; 4', 4", 4"'), connected thereto, from the point of view of at least one of the nodes (3, 4; 4', 4", 4"'), wherein the communication system (1) has means for transmitting messages in message frames (32) for firmly prescribed communication cycles (n, n+1, n+2, ...),
**characterized in that** the manipulation of the operating state comprises at least the manipulation of the physical data bus (2), and **in that** the apparatus (10) is equipped to execute the manipulation of the operating state when it is arranged in a position in the data bus (2) between the at least one node (4; 4', 4", 4"') from the point of view of which the operating state of the communication system (1) is being manipulated and the remainder of the nodes (3) in the communication system (1), and **in that** the apparatus (10) has means for shorting the data bus (2) and/or for interrupting the data bus (2).

2. Apparatus (10) according to Claim 1, **characterized in that** the means for shorting and/or interrupting the data bus (2) comprise at least one switching element.

3. Apparatus (10) according to Claim 2, **characterized in that** the switching element is in the form of a switch or a multiplexer/demultiplexer.

4. Apparatus (10) according to one of Claims 1 to 3, **characterized in that** the apparatus (10) has means (12) for intercepting messages before they reach the at least one node (4; 4', 4", 4"'), means (11) for manipulating the intercepted messages and means (13) for sending the manipulated messages to the at least one node (4; 4', 4", 4"').

5. Apparatus (10) according to one of Claims 1 to 4, **characterized in that** the manipulation apparatus (10) can be activated and deactivated purposefully, wherein in the deactivated state it does not manipulate the physical data bus (2) and/or allows the messages intended for the at least one node (4; 4', 4", 4"') that has been isolated from the data bus by the manipulation apparatus (10) to pass without manipulation.

6. Apparatus (10) according to Claim 5, **characterized in that** the transmitted message frames (32) have free times (33) provided between them in which no communication messages are transmitted, and **in that** the manipulation apparatus (10) has switching means (16, 17) for activating and deactivating the means (11) for manipulating the messages during the free times (33).

7. Apparatus (10) according to one of Claims 1 to 6, **characterized in that** the apparatus (10) has information relating to the design and the temporal response of the communication system (1), particularly relating to the message transmission via the data bus (2), and the apparatus (10) prompts the activation and deactivation of the means for manipulating the physical data bus (2) and/or of the means (11) for manipulating the messages on the basis of the information relating to the communication system (1).

8. Apparatus (10) according to Claim 7, **characterized in that** the information relating to the communication system (1) is available in the form of a Fibex file.

9. Communication system (1) comprising a physical data bus (2) and a plurality of nodes (3, 4; 4', 4", 4"') connected thereto, wherein the communication system (1) has means for transmitting communication messages between the nodes (3, 4; 4', 4", 4"') via the data bus (2) in message frames (32) for firmly prescribed communication cycles (n, n+1, n+2, ...), **characterized in that** the communication system (1) comprises an apparatus (10), inserted into the data bus (2) between at least one of the nodes (4; 4', 4", 4"') and the remainder of the nodes (3) in the communication system (1), for manipulating an operating state of the communication system (1) from the point of view of the at least one node (4; 4', 4", 4"') that has been isolated from the remainder of the nodes (3) by the apparatus (10), wherein the apparatus (10) has means for shorting the data bus (2) and/or for interrupting the data bus (2).

10. Communication system (1) according to Claim 9, **characterized in that** the communication system (1) is in the form of a FlexRay communication system.

11. Communication system (1) according to Claim 9 or 10, **characterized in that** the apparatus (10) is in a form as claimed in one of Claims 2 to 8.

12. Method for manipulating an operating state of a communication system (1) comprising a physical data bus (2) and a plurality of nodes (3, 4; 4', 4", 4"') connected thereto, wherein the method comprises the manipulation of the operating state of the communication system (1) from the point of view of at least one of the nodes (4; 4', 4", 4"'), wherein the messages are transmitted in the communication system (1) in message frames (32) for firmly prescribed communication cycles (n, n+1, n+2, ...),
**characterized in that** the manipulation of the operating state comprises at least the manipulation of the physical data bus (2), **in that** the manipulation of the operating state of the communication system (1) involves an apparatus (10) for manipulating the operating state being inserted between the at least one node (4; 4', 4", 4"') from the point of view of which the operating state of the communication system (1) is being manipulated and the remainder of the nodes (3) in the communication system (1).

13. Method according to Claim 12, **characterized in that** the manipulation of the operating state of the communication system (1) also involves messages intended for the at least one node (4; 4', 4", 4"') from the point of view of which the operating state of the communication system (1) is being manipulated being manipulated and the messages to be manipulated being intercepted and manipulated by the apparatus (10) before they reach the at least one node (4; 4', 4", 4"') and the manipulated messages being transmitted to the at least one node (4; 4' 4" 4"').

## Revendications

1. Dispositif (10) destiné à manipuler l'état de fonctionnement d'un système de communication (1),
le dispositif comprenant un bus physique de données (2) auquel sont raccordés plusieurs noeuds (3, 4; 4', 4", 4"') du point de vue d'au moins l'un des noeuds (3, 4; 4', 4", 4"'),
le système de communication (1) présentant des moyens de transfert de messages dans des trames (32) de messages en des cycles de communication (n, n+1, n+2, ...) prédéterminés de manière fixe,
**caractérisé en ce que**
la manipulation de l'état de fonctionnement comporte au moins la manipulation du bus physique de données (2) et
**en ce que** le dispositif (10) est formé de manière à exécuter la manipulation de l'état de fonctionnement lorsqu'il se trouve dans le bus de données (2) en une position située entre le ou les noeuds (4; 4', 4", 4"') du point de vue desquels l'état de fonctionnement du système de communication (1) est manipulé et les autres noeuds (3) du système de communication (1) et
**en ce que** le dispositif (10) présente des moyens de mise en court-circuit du bus de données (2) et/ou d'interruption du bus de données (2).

2. Dispositif (10) selon la revendication 1, **caractérisé en ce que** les moyens de mise en court-circuit et/ou d'interruption du bus de données (2) comportent au moins un élément de commutation.

3. Dispositif (10) selon la revendication 2, **caractérisé en ce que** l'élément de commutation est configuré comme commutateur et/ou comme multiplexeur/démultiplexeur.

4. Dispositif (10) selon l'une des revendications 1 à 3, **caractérisé en ce que** le dispositif (10) présente des moyens (12) de capture des messages avant qu'ils atteignent le ou les noeuds (4; 4', 4", 4"'), des moyens (11) de manipulation des messages capturés et des moyens (13) d'envoi des messages manipulés vers le ou les noeuds (4; 4', 4", 4"').

5. Dispositif (10) selon l'une des revendications 1 à 4, **caractérisé en ce que** le dispositif de manipulation (10) peut être activé et désactivé de manière contrôlée et **en ce qu'**à l'état désactivé, il ne manipule pas le bus physique des données (2) et/ou laisse passer sans manipulation les messages destinés au noeud ou aux noeuds (4; 4', 4", 4"') séparés du bus des données par le dispositif de manipulation (10).

6. Dispositif (10) selon la revendication 5, **caractérisé en ce que** des temps libres (33) au cours desquels aucun message de communication n'est transmis sont prévus entre les trames (32) de transmission des messages et **en ce que** le dispositif de manipulation (10) présente des moyens de commutation (16, 17) qui activent ou désactivent les moyens (11) de manipulation des messages pendant les temps libres (33).

7. Dispositif (10) selon l'une des revendications 1 à 6, **caractérisé en ce que** le dispositif (10) dispose d'informations concernant la structure et le comportement dans le temps du système de communication (1), en particulier concernant le transfert des messages par le bus de données (2), et **en ce que** le dispositif (10) permet l'activation ou la désactivation des moyens de manipulation du bus physique de données (2) et/ou des moyens (11) de manipulation des messages en fonction des informations concernant le système de communication (1).

8. Dispositif (10) selon la revendication 7, **caractérisé en ce que** les informations concernant le système de communication (1) présentent la forme de fichiers Fibex.

9. Système de communication (1) comportant un bus physique de données (2) auquel sont raccordés plusieurs noeuds (3, 4; 4', 4", 4"'),
le système de communication (1) présentant des moyens de transfert de messages de communication entre les noeuds (3, 4; 4', 4", 4"') par le bus de données (2) en trames (32) de messages en des cycles de communication (n, n+1, n+2, ...) prédéterminés de manière fixe,
**caractérisé en ce que**
le système de communication (1) comporte un dispositif (10) de manipulation d'un état de fonctionnement du système de communication (1) du point de vue du ou des noeuds (4; 4', 4", 4"') séparés des autres noeuds (3) par le dispositif (10), placé dans le bus de données (2) entre au moins un des noeuds (4; 4', 4", 4"') et les autres noeuds (3) du système de communication (1), le dispositif (10) présentant des moyens de mise en court-circuit du bus de données (2) et/ou d'interruption du bus de données (2).

10. Système de communication (1) selon la revendication 9, **caractérisé en ce que** le système de communication (1) est configuré comme système de communication dit FlexRay.

11. Système de communication (1) selon les revendications 9 ou 10, **caractérisé en ce que** le dispositif (10) est configuré selon l'une des revendications 2 à 8.

12. Procédé de manipulation de l'état de fonctionnement d'un système de communication (1) qui comporte un bus physique de données (2) auquel sont raccordés plusieurs noeuds (3, 4; 4', 4", 4"'), le procédé assurant la manipulation de l'état de fonctionnement du système de communication (1) du point de vue d'au moins l'un des noeuds (4; 4', 4", 4"'), en ce que les messages sont transmis dans le système de communication (1) dans des trames (32) de messages en des cycles de communication (n, n+1, n+2, ...) prédéfinis de manière fixe,
**caractérisé en ce que**
la manipulation de l'état de fonctionnement comporte au moins la manipulation du bus physique de données (2) et
**en ce que** pour la manipulation de l'état de fonctionnement du système de communication (1), un dispositif (10) de manipulation de l'état de fonctionnement est placé entre le ou les noeuds (4; 4', 4", 4"') du point de vue desquels l'état de fonctionnement du système de communication (1) est manipulé et les autres noeuds (3) du système de communication (1).

13. Procédé selon la revendication 12, **caractérisé en ce que** dans le cadre de la manipulation de l'état de fonctionnement du système de communication (1), certains messages sont manipulés également pour le ou les noeuds (4; 4', 4", 4"') du point de vue desquels l'état de fonctionnement du système de communication (1) est manipulé et **en ce qu'**avant d'atteindre le ou les noeuds (4; 4', 4", 4"'), les messages à manipuler sont capturés par le dispositif (10) et sont manipulés, les messages manipulés étant transmis au noeud ou aux noeuds (4; 4', 4", 4"').
